# EUROPEAN PATENT SPECIFICATION

(11) **EP 1 584 853 B1**
(45) Date of publication and mention of the grant of the patent: **12.12.2018**
(21) Application number: 05007295.8
(22) Date of filing: 04.04.2005
(51) Int. Cl.: F16L 11/08

(54) **Hose with high flexibility and heat resistance, and low permeability**
Schlauch mit hoher Flexibilität, hoher Hitzebeständigkeit und niedriger Durchlässigkeit
Tuyau de grande flexibilité avec grande résistance à la chaleur et petite perméabilité

(30) Priority: 08.04.2004 IT MI20040704
(43) Date of publication of application: 12.10.2005
(73) Proprietor: Maflow BRS S.r.l., 63100 Ascoli Piceno (IT)
(72) Inventor: Mancinelli, Piero, 65124 Pescara (IT); Dolente, Gianluca, 64011 Alba Adriatica (Prov. of Teramo) (IT); Salvia, Vincenzo, (Prov. of Ascoli Piceno) (IT); Reali, Paolo, (Prov. of Teramo) (IT)
(74) Representative: Modiano, Micaela Nadia

(56) References cited:
- EP-A- 0 638 750
- EP-A- 1 393 889
- DE-A1- 4 232 946
- US-A- 4 881 576

## Description

The present invention relates to a hose with high flexibility and heat resistance, and very low permeability. More particularly, the invention relates to a hose that is adapted for climate control, conditioning and refrigeration systems for vehicles and fixed installations.

As is known, the environmentally-friendly orientation of current and future environmental standards entails the maximum possible reduction of the emission of greenhouse gases into the environment.

Climate control, conditioning and refrigeration systems are among the main devices responsible for these emissions. Substantially, these systems are provided with flexible hoses, whose flexibility allows to mutually connect components that vibrate with respect to each other. This flexibility is achieved by using polymeric materials, whose molecular structure is substantially amorphous.

The emission of gases into the atmosphere is caused by the permeation of the gases, which pass through flexible hoses, and is highly dependent on the nature of such flexible hoses. In particular, as the degree of crystallinity of the material of which the hose is made increases, the permeability through such hose decreases.

However, from a mechanical standpoint, as the degree of crystallinity increases, so does the brittleness of the material, and therefore its ability to deform elastically decreases and so does its fatigue strength.

However, the deformability and fatigue-strength characteristics are critical for flexible hoses adapted for conveying gases under pressure and subjected to fatigue.

Flexible hoses for conveying coolant gases are currently divided into two groups: the first group consists of hoses with a thick rubber base layer, and the second group has a single thin thermoplastic flexible layer that acts as a gas barrier.

US-A-4 881 576 discloses a hose as defined in the preamble of claim 1.

The aim of the present invention is to provide a hose with high flexibility and very low permeability that can be used in climate control, conditioning and refrigeration systems, ensuring extremely low emissions of gases into the atmosphere, thus helping to reduce the presence of greenhouse gases in the environment.

Within this aim, an object of the present invention is to provide a hose that combines the characteristics of extremely low permeability with high flexibility, in order to allow its use in conditioning, climate control and refrigeration systems.

Another object of the present invention is to provide a hose that also has a high heat resistance and mechanical strength.

Another object of the present invention is to provide a hose that is highly reliable, relatively simple to provide, and at competitive costs.

This aim and these and other objects that will become better apparent hereinafter are achieved by a hose with very high flexibility and very low permeability to refrigeration gases, particularly for climate control, conditioning and refrigeration systems, for vehicles and fixed installations, as defined in claim 1.

Further characteristics and advantages of the invention will become better apparent from the description of preferred but not exclusive embodiments of the hose according to the invention, illustrated by way of non-limiting example in the accompanying drawings, wherein:
Figure 1 is a cutout perspective view of the hose according to a first embodiment of the present invention; and
Figure 2 is a cutout perspective view of the hose according to a second embodiment of the present invention.

With reference to the figures, the hose according to the present invention, generally designated by the reference numeral 1, comprises at least one layer 2 made of flexible thermoplastic material, on which there is at least one layer 3 made of impermeable thermoplastic material, on which there is further at least one layer of rubber 4, which in turn is covered by a reinforcement layer 5, and on which an additional layer of rubber 6 is finally arranged.

The layer 2 is made of polyamide 6 modified with polyolefins, in order to allow the polyamide to be flexible. The layer 3 is made of EVOH.

Conveniently, the hose according to the invention can further comprise, between the layer of impermeable thermoplastic material 3 and the layer of rubber 4, a layer 7 of flexible thermoplastic material, which is similar or not to the layer of flexible thermoplastic material 2.

However, the layer 7 also is made of polyamide 6 (PA6), which is rendered flexible so that the layer 3 made of EVOH is interposed between the two flexible layers 2 and 7.

This configuration ensures an extremely high breaking elongation (approximately 180%) and a heat resistance which is higher than known hoses.

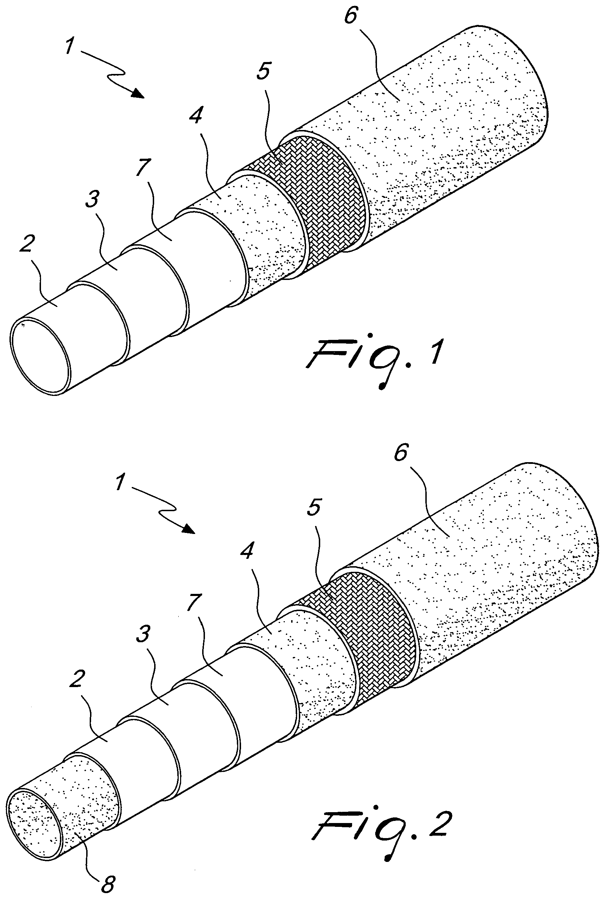

The hose according to the invention, according to a second embodiment thereof, can have, inside the first layer of flexible thermoplastic material 2, an additional layer of rubber 8, as shown in Figure 2.

In this case, the layer of thermoplastic material 2 and the layer of impermeable thermoplastic material 3 are arranged between two layers of rubber, designated by the reference numerals 8 and 4 respectively.

Substantially, according to the invention the hose is provided by means of a coupling of a plurality of layers, in which the layer of flexible thermoplastic material 2 constitutes the inner wall of the hose, according to the first embodiment, or the first layer arranged on the inner rubber layer 8, according to the second embodiment.

Such layer or combination of flexible thermoplastic layers constitutes a gas barrier. Flexibility is achieved by then reducing the thickness of the impermeable layer 3, typically by using highly crystalline and rigid materials. Bonding of this layer with other thermoplastic or flexible layers allows deformation (as a consequence of pressure inside the hose) without damage.

Therefore, the first embodiment shows a hose with a thermoplastic base layer provided by the flexible thermoplastic layer 2, while the second embodiment illustrates the hose with a thermoplastic base layer arranged between the rubber layers 8 and 4.

In practice it has been observed that the hose according to the invention fully achieves the intended aim and objects, since it allows to provide a hose that is highly flexible, like the hoses currently used in refrigeration, conditioning, climate control systems and the like, yet allows the hose to have extremely low leakage by permeation therethrough, so as to avoid contributing to the emission of gases into the atmosphere.

Moreover, the hose thus provided is extremely resistant to internal and external deformations, thanks to the coupling of two different types of thermoplastic flexible and impermeable materials.

The hose thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A hose (1) with high flexibility and heat resistance, and low permeability to refrigeration gases, particularly for climate control, conditioning and refrigeration systems, for vehicles and fixed installations, comprising at least one outer layer (6) made of rubber, and at least one layer (2) of flexible thermoplastic material coupled to at least one layer (3) of impermeable thermoplastic material, said at least one layer of flexible thermoplastic material (2) and said at least one layer (3) of impermeable thermoplastic material constituting the inner core of said hose, **characterized in that** said at least one layer (2) of flexible thermoplastic material is made of polyamide 6 modified with polyolefins so as to render the polyamide flexible and **in that** said at least one layer (3) of impermeable thermoplastic material is made of EVOH.

2. The hose according to claim 1, **characterized in that** it comprises a layer of rubber (4) arranged around said at least one layer (3) of impermeable thermoplastic material.

3. The hose according to one or more of the preceding claims, **characterized in that** it comprises an additional layer (8) of rubber arranged inside said at least one layer (2) of flexible thermoplastic material.

4. The hose according to claim 2, **characterized in that** it comprises a reinforcement layer (5) arranged around said rubber layer (4) arranged around said at least one layer (3) of impermeable thermoplastic material.

5. The hose according to claim 1, **characterized in that** it comprises a second layer (7) of flexible thermoplastic material, which is coupled to said at least one layer (3) of impermeable thermoplastic material.

6. The hose according to claim 5, **characterized in that** said second layer (7) of flexible thermoplastic material is made of polyamide 6 modified with polyolefins.

## Patentansprüche

1. Ein Schlauch (1) mit hoher Flexibilität und Hitzebeständigkeit und niedriger Durchlässigkeit für Kühlgase, insbesondere für Klimatisierungs- und Kühlsysteme für Fahrzeuge und feste Installationen, der mindestens eine äußere Schicht (6) aus Gummi und mindestens eine Schicht (2) aus biegsamem thermoplastischem Material umfasst, gekoppelt mit mindestens einer Schicht (3) aus undurchlässigem thermoplastischem Material, wobei die mindestens eine Schicht aus biegsamem thermoplastischem Material (2) und die mindestens eine Schicht (3) aus undurchlässigem thermoplastischem Material den inneren Kern des Schlauchs bilden, **dadurch gekennzeichnet, dass** die mindestens eine Schicht (2) aus biegsamem thermoplastischem Material aus Polyamid 6, modifiziert mit Polyolefinen, besteht, um das Polyamid biegsam zu machen, und dadurch, dass die mindestens eine Schicht (3) aus undurchlässigem thermoplastischem Material aus EVOH besteht.

2. Der Schlauch gemäß Anspruch 1, **dadurch gekennzeichnet, dass** er eine Schicht aus Gummi (4) umfasst, angeordnet um die mindestens eine Schicht (3) aus undurchlässigem thermoplastischem Material.

3. Der Schlauch gemäß einem oder mehreren der obigen Ansprüche, **dadurch gekennzeichnet, dass** er eine zusätzliche Schicht (8) Gummi umfasst, angeordnet innerhalb der mindestens einen Schicht (2) aus biegsamem thermoplastischem Material.

4. Der Schlauch gemäß Anspruch 2, **dadurch gekennzeichnet, dass** er eine Verstärkungsschicht (5) umfasst, angeordnet um die Gummischicht (4), angeordnet um die mindestens eine Schicht (3) aus undurchlässigem thermoplastischem Material.

5. Der Schlauch gemäß Anspruch 1, **dadurch gekennzeichnet, dass** er eine zweite Schicht (7) aus biegsamem thermoplastischem Material umfasst, die mit der mindestens einen Schicht (3) aus undurchlässigem thermoplastischem Material gekoppelt ist.

6. Der Schlauch gemäß Anspruch 5, **dadurch gekennzeichnet, dass** die zweite Schicht (7) aus biegsamem thermoplastischem Material aus Polyamid 6, modifiziert mit Polyolefinen, besteht.

## Revendications

1. Tuyau (1) de grande flexibilité et à haute résistance à la chaleur et à faible perméabilité aux gaz réfrigérants, en particulier pour des systèmes de régulation, de conditionnement et de réfrigération d'ambiance, destinés à des véhicules et à des installations fixes, comprenant au moins une couche extérieure (6), constituée de caoutchouc, et au moins une couche (2) de matière thermoplastique souple, reliée à au moins une couche (3) de matière thermoplastique imperméable, ladite couche, au nombre d'au moins une, de matière thermoplastique souple (2) et ladite couche (3), au nombre d'au moins une, de matière thermoplastique imperméable constituant l'âme intérieure dudit tuyau, **caractérisé en ce que** ladite couche (2), au nombre d'au moins une, de matière thermoplastique souple est constituée de polyamide 6 modifié avec des polyoléfines, de manière à rendre le polyamide souple, et **en ce que** ladite couche (3), au nombre d'au moins une, de matière thermoplastique imperméable est constituée d'EVOH.

2. Tuyau selon la revendication 1, **caractérisé en ce qu'**il comporte une couche de caoutchouc (4) disposée autour de ladite couche (3), au nombre d'au moins une, de matière thermoplastique imperméable.

3. Tuyau selon une ou plusieurs des revendications précédentes, **caractérisé en ce qu'**il comporte une couche supplémentaire (8) de caoutchouc, qui est disposée à l'intérieur de ladite couche (2), au nombre d'au moins une, de matière thermoplastique souple.

4. Tuyau selon la revendication 2, **caractérisé en ce qu'**il comporte une couche de renforcement (5) disposée autour de ladite couche de caoutchouc (4) disposée autour de ladite couche, au nombre d'au moins une, de matière thermoplastique imperméable.

5. Tuyau selon la revendication 1, **caractérisé en ce qu'**il comporte une deuxième couche (7) de matière thermoplastique souple, qui est reliée à ladite couche (3), au nombre d'au moins une, de matière thermoplastique imperméable.

6. Tuyau selon la revendication 5, **caractérisé en ce que** ladite deuxième couche (7) de matière thermoplastique souple est constituée de polyamide 6 modifié avec des polyoléfines.
